# EUROPEAN PATENT APPLICATION

(11) **EP 2 141 568 A1**
(43) Date of publication of application: **06.01.2010**
(21) Application number: 09173747.8
(22) Date of filing: 07.10.2005
(51) Int. Cl.: G06F 1/32, G06F 3/033

(54) **Portable electronic device including trackball unit and associated methods**

(62) Divisional of application: 05256271.7
(71) Applicant: Research in Motion Limited, Waterloo, ON N2L 3W8 (CA)
(72) Inventor: Moosavi, Vahid, Waterloo Ontario N2L 3W8 (CA); Orr, Kevin H., Waterloo Ontario N2L 3W8 (CA); Wynen, John W., Waterloo Ontario N2L 3W8 (CA); Fyke, Steven H., Waterloo Ontario N2L 3W8 (CA)
(74) Representative: Howson, Richard G.B.

(57) **Abstract**

The portable electronic device, such as a cell phone or wireless email device, includes a portable housing, a battery carried by the portable housing, and a trackball carried by the portable housing for permitting user pointing. The trackball includes a ball, at least one rotation sensor cooperating with the ball, and a power control switch responsive to displacement of the ball for selectively powering the at least one rotation sensor from the battery. The electronic device conserves power by selectively powering the trackball unit for user pointing and selecting.

## Description

### Field of the Invention

The invention relates to the field of portable electronic devices, and, more particularly, to portable electronic devices including a trackball unit and related methods.

### Background of the Invention

An electronic device may conserve power by using a power management scheme that switches various system components to a low-power or no-power state based upon user settings and/or user input. Such a low-power state may be referred to as a standby, sleep, or hibernation state. The electronic device or components thereof may transition to an active or high-power state from the low-power state when something triggers the electronic device or components to begin a wake-up routine.

One way to trigger the wake-up routine for the electronic device is by using programmable state transitions as is disclosed by U.S. Published Application No. 2003/0145242 to Derocher et al. The electronic device includes a clock that generates a signal in response to a programmed time of day to initialize a wake-up routine for the electronic device. Similarly, U.S. Patent No. 5,530,879 to Crump et al. also discloses a system that initiates a wake-up routine based on a signal from a timer, as well as from a signal received from a switch or modem connected to the system.

U.S. Published Application No. 2003/0159076 to Delisle et al. also discloses an electronic device using switches to initialize a wake-up routine. The electronic device includes a keyboard controller that is connected to power, standby, lid open/close, and battery insertion/removal switches. An activation signal sent by any of the foregoing switches causes the keyboard controller to initiate a wake-up routine for the electronic device.

Another way to initiate a wake-up routine is for an electronic device to be responsive to a pointing device. U.S. Patent No. 5,990,868 to Frederick discloses a pointing device for an electronic device that includes a power management system connected to a trackball. The power management system continually monitors the trackball for activity and adjusts the power level of the trackball according to the amount of time it has been idle. U.S. Patent No. 5,974,558 to Cortopassi et al. discloses an electronic device having a digitizer panel that uses a passive stylus as a pointing device. The electronic device may go into a low-power state after a predetermined period of inactivity, and the stylus touching the digitizer panel initializes a wake-up routine.

Power management is especially important for a portable electronic device, like a cell phone and wireless email device, whose operation may be limited by the operational charge of its battery.

### Summary of the Invention

In view of the foregoing background, it is therefore an object of the invention to provide an electronic device that conserves power by selectively powering a trackball unit for user pointing and selecting.

This and other objects, features, and advantages in accordance with the invention are provided by a portable electronic device, such as a cell phone or wireless email device comprising a portable housing, a battery carried by the portable housing, and a trackball carried by the portable
housing for permitting user pointing. The trackball may include a frame, a ball mounted by the frame to permit user rotation and displacement of the ball, at least one rotation sensor cooperating with the ball, and a power control switch responsive to displacement of the ball for selectively powering the at least one rotation sensor from the battery.

A circuit board may be carried by the portable housing and mounting the trackball, and the power control switch may be operatively connected between the ball and the circuit board. The power control switch may comprise at least one electrically conductive spring for biasing the ball outwardly from the circuit board. The at least one electrically conductive spring may comprise a first end electrically connected to the circuit board, and a second end being movable and defining a first contact of the power control switch.

A selection switch may be included that is also responsive to displacement of the ball for permitting user selection, and the selection switch may comprise a deformable electrically conductive dome carried by the circuit board and defining a second contact of the power control switch. The at least one electrically conductive spring may comprise a pair of electrically conductive springs, each having first ends electrically connected to the circuit board and second ends being movable together and defining first and second contacts for the power control switch. The at least one electrically conductive spring may comprise a cantilevered leaf spring.

The at least one rotation sensor may comprise at least one magnetic roller and a Hall sensor associated therewith. For example, the at least one rotation sensor may comprise four magnetic rollers and a respective Hall sensor associated with each magnetic roller.

Electronic circuitry may be carried by the portable housing and connected to the battery and the trackball. The electronic circuitry may be switchable from a sleep mode to an active mode based upon operation of the trackball in a non-random pattern and not switching from the sleep mode to the active mode based upon operation of the trackball in a random pattern. The non-random pattern corresponds to manipulation of the pointing device at a uniform speed and in a uniform direction. The trackball may be exposed on an outer surface of the portable housing.

A method aspect of the invention is directed to power management for a portable electronic device comprising a portable housing, a battery and trackball carried by the portable housing for permitting user pointing. The trackball includes a frame, a ball mounted by the frame to permit user rotation and displacement of the ball, and at least one rotation sensor cooperating with the ball. The method includes selectively powering the at least one rotation sensor from the battery in response to displacement of the ball.

The portable electronic device may further comprise a circuit board carried by the portable housing and mounting the trackball, and wherein selectively powering comprises providing a power control switch operatively connected between the ball and the circuit board. Providing a power control switch may comprise providing at least one electrically conductive spring for biasing the ball outwardly from the circuit board.

The at least one electrically conductive spring may comprise a first end electrically connected to the circuit board, and a second end being movable and defining a first contact of the power control switch. The at least one rotation sensor may comprise at least one magnetic roller and a Hall sensor associated therewith, for example, the at least one rotation sensor may comprise four magnetic rollers and a respective Hall sensor associated with each magnetic roller.

The portable electronic device may further comprise electronic circuitry carried by the portable housing and connected to the battery and the trackball, and the method may further comprise switching the electronic circuitry from a sleep mode to an active mode based upon operation of the pointing device in a non-random pattern, and not switching the electronic circuitry from the sleep mode to the active mode based upon operation of the pointing device in a random pattern.

### Brief Description of the Drawings

FIG. 1 is a schematic diagram of a portable electronic device in accordance with the invention.
FIG. 2 is a more detailed exploded view of the trackball of the portable electronic device of FIG. 1.
FIG. 3 is a top view of an embodiment of the trackball of FIG. 2.
FIG. 4 is a cross-sectional view of the trackball of FIG. 3.
FIG. 5 is a cross-sectional view of another embodiment of the trackball of FIG. 2.
FIG. 6 is a more detailed schematic diagram, partially in section, of a portion of the portable electronic device as shown in FIG. 1.
FIG. 7 is a non-random pattern pulse timing diagram as may be generated by the pointing device of the portable electronic device of FIG. 1.
FIG. 8 is a random pattern pulse timing diagram as may be generated by the pointing device of the portable electronic device of FIG. 1.
FIG. 9 is a random pattern pulse timing diagram as may be generated by the pointing device of the portable electronic device of FIG. 1.
FIG. 10 is a flow chart illustrating a method according to the invention.
FIG. 11 is a more detailed schematic block diagram of an alternate embodiment of a portable electronic device according to the invention.

### Detailed Description of the Preferred Embodiments

The device will now be described more fully hereinafter with reference to the accompanying drawings, in which preferred embodiments are shown. This device may, however, be embodied in many different forms and should not be construed as limited to the embodiments set forth herein. Rather, these embodiments are provided so that this disclosure will be thorough and complete, and will fully convey the scope to those skilled in the art. Like numbers refer to like elements throughout.

In general, the device can be summarized as follows. In view of the foregoing background, it is therefore an object to provide an electronic device that conserves power by selectively powering a trackball unit for user pointing and selecting.

This and other objects, features, and advantages are provided by a portable electronic device, such as a cell phone or wireless email device comprising a portable housing, a battery carried by the portable housing, and a trackball carried by the portable housing for permitting user pointing. The trackball may include a frame, a ball mounted by the frame to permit user rotation and displacement of the ball, at least one rotation sensor cooperating with the ball, and a power control switch responsive to displacement of the ball for selectively powering the at least one rotation sensor from the battery.

A circuit board may be carried by the portable housing and mounting the trackball, and the power control switch may be operatively connected between the ball and the circuit board. The power control switch may comprise at least one electrically conductive spring for biasing the ball outwardly from the circuit board. The at least one electrically conductive spring may comprise a first end electrically connected to the circuit board, and a second end being movable and defining a first contact of the power control switch.

A selection switch may be included that is also responsive to displacement of the ball for permitting user selection, and the selection switch may comprise a deformable electrically conductive dome carried by the circuit board and defining a second contact of the power control switch. The at least one electrically conductive spring may comprise a pair of electrically conductive springs, each having first ends electrically connected to the circuit board and second ends being movable together and defining first and second contacts for the power control switch. The at least one electrically conductive spring may comprise a cantilevered leaf spring.

The at least one rotation sensor may comprise at least one magnetic roller and a Hall sensor associated therewith. For example, the at least one rotation sensor may comprise four magnetic rollers and a respective Hall sensor associated with each magnetic roller.

Electronic circuitry may be carried by the portable housing and connected to the battery and the trackball. The electronic circuitry may be switchable from a sleep mode to an active mode based upon operation of the trackball in a non-random pattern and not switching from the sleep mode to the active mode based upon operation of the trackball in a random pattern. The non-random pattern corresponds to manipulation of the pointing device at a uniform speed and in a uniform direction. The trackball may be exposed on an outer surface of the portable housing.

A method aspect is directed to power management for a portable electronic device comprising a portable housing, a battery and trackball carried by the portable housing for permitting user pointing. The trackball includes a frame, a ball mounted by the frame to permit user rotation and displacement of the ball, and at least one rotation sensor cooperating with the ball. The method includes selectively powering the at least one rotation sensor from the battery in response to displacement of the ball.

The portable electronic device may further comprise a circuit board carried by the portable housing and mounting the trackball, and wherein selectively powering comprises providing a power control switch operatively connected between the ball and the circuit board. Providing a power control switch may comprise providing at least one electrically conductive spring for biasing the ball outwardly from the circuit board.

The at least one electrically conductive spring may comprise a first end electrically connected to the circuit board, and a second end being movable and defining a first contact of the power control switch. The at least one rotation sensor may comprise at least one magnetic roller and a Hall sensor associated therewith, for example, the at least one rotation sensor may comprise four magnetic rollers and a respective Hall sensor associated with each magnetic roller.

The portable electronic device may further comprise electronic circuitry carried by the portable housing and connected to the battery and the trackball, and the method may further comprise switching the electronic circuitry from a sleep mode to an active mode based upon operation of the pointing device in a non-random pattern, and not switching the electronic circuitry from the sleep mode to the active mode based upon operation of the pointing device in a random pattern.

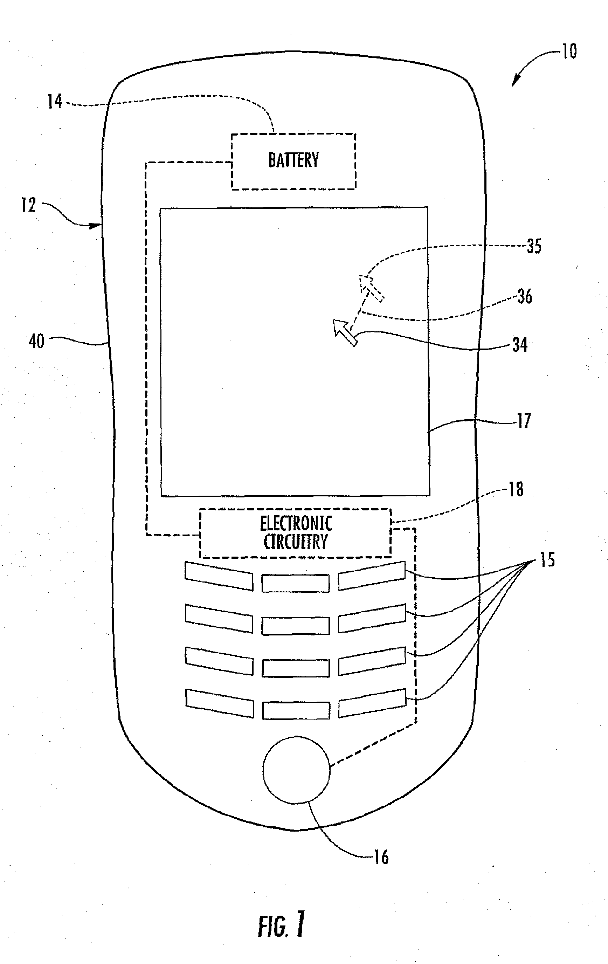

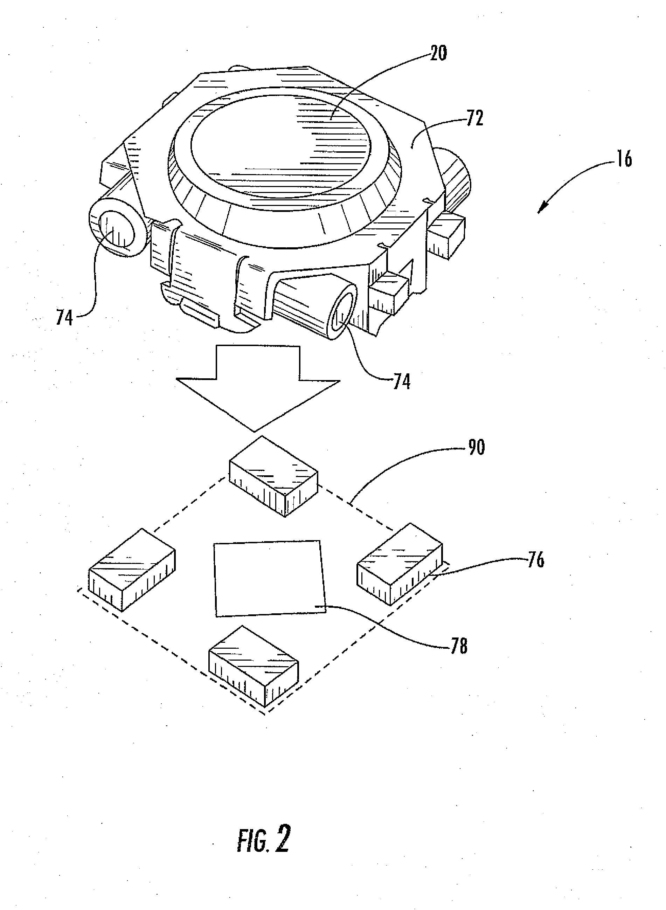

Referring initially to FIGS. 1-4, a portable electronic device **10** is now described. The portable electronic device **10** illustratively includes a portable housing **12,** and a battery **14** and pointing device **16** carried by the portable housing. The pointing device **16** is a trackball type input device or jog ball, and will be referred to hereinafter simply as a trackball **16.**

The portable electronic device **10** further includes electronic circuitry **18** carried by the portable housing **12** and connected to the battery **14** and the trackball **16** as will be appreciated by those skilled in the art. The portable electronic device **10** also illustratively includes a display screen **17** and input keys **15.** Both the display screen **17** and input keys **15** are connected to the electronic circuitry **18** as will be appreciated by those of skill in the art. The portable electronic device **10** may be in the form of a cell phone, personal digital assistant (PDA), wireless email device, pager, or the like, for example.

The trackball **16** may include a frame **72,** a ball **70** mounted by the frame to permit user rotation and displacement of the ball, at least one rotation sensor **74, 76** cooperating with the ball, and a power control switch **78, 80, 84, 88** responsive to displacement of the ball **70** for selectively powering the at least one rotation sensor **74, 76** from the battery.

A circuit board **90** may be carried by the portable housing **12** and mounting the trackball **16,** and the power control switch may be operatively connected between the ball **70** and the circuit board. The power control switch may comprise at least one electrically conductive spring **80** for biasing the ball **70** outwardly from the circuit board **90.** The at least one electrically conductive spring **80** may comprise a first end **81** electrically connected via contact **84** to the circuit board **90,** and a second end **83** being movable and defining a first contact of the power control switch.

A selection switch **78, 88** may be included that is also responsive to displacement of the ball **16** for permitting user selection, and the selection switch may comprise a deformable electrically conductive dome **78** and associated contacts **88** carried by the circuit board **90** and defining a second contact of the power control switch.

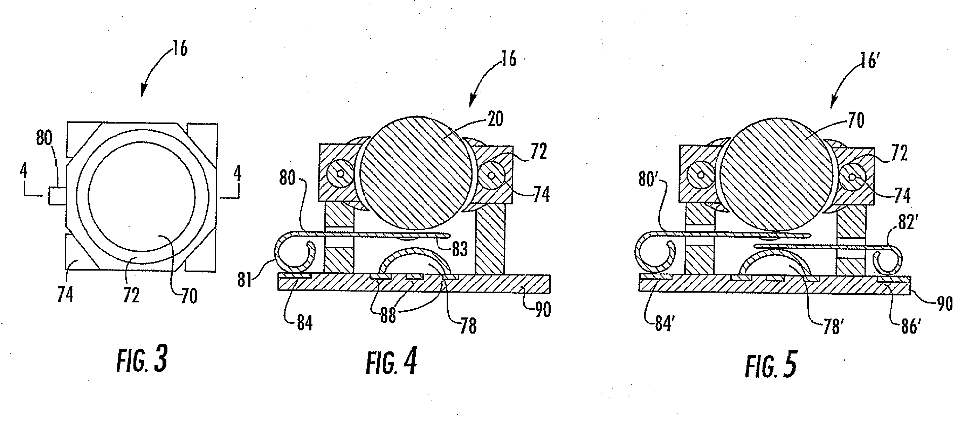

In another embodiment of the trackball **16',** the at least one electrically conductive spring may comprise a pair of electrically conductive springs **80', 82',** illustratively shown in FIG. 5, each having first ends electrically connected to the circuit board **90,** via contacts **84', 86',** and second ends being movable together and defining first and second contacts for the power control switch. As shown in the figures, each of the electrically conductive springs **80', 82'** may comprise a cantilevered leaf spring. In this embodiment, the power control switch is defined by the electrically conductive springs **80', 82'** and contacts **84', 86'**.

As illustrated, the at least one rotation sensor **74, 76** may comprise at least one magnetic roller **74** and a Hall sensor **76** associated therewith. The operation of such a magnetic roller **74** and a Hall sensor **76** is within the knowledge of the skilled artisan. The at least one rotation sensor **74, 76** may comprise four magnetic rollers **74** and a respective Hall sensor **76** associated with each magnetic roller, as illustrated.

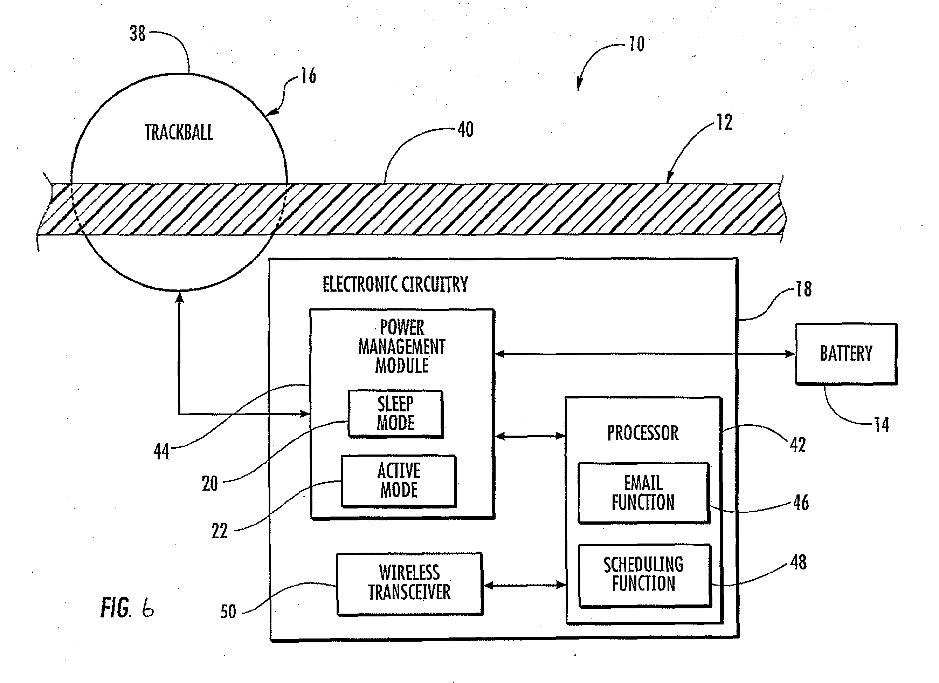

The hall sensors or Hall-ICs **76** used for trackball movement detection have a significant quiescent current when in standby mode. Typically four hall ICs **76,** one for each direction (up, down, left, right), are used to track movement of the ball **70.** The present device and method addresses the need to reduce the power consumed when the trackball **16** is not in use to extend battery life. By powering off the hall ICs **76** when the user does not touch the trackball **16,** the power usage is reduced. The use of the power control switch **78/80/84/88** or **80'/82'/84'/86'** triggers (preferably via the power management module **44** discussed in further detail below with reference to FIG. 6) the processor **42** to wake-up, and thereby provide power to the hall ICs **76,** when the trackball **16** is first moved. The switch preferably uses very light activation force. The Power Management Module **44,** may enable all or just some (e.g. Up/Down direction) of the Hall ICs **76** to be able to detect the trackball rolling speed and direction to thereby decide if it should wake up the processor **42.**

To further improve current consumption during operation of the trackball **16,** when the trackball moves in one direction, the respective Hall IC **76** in the opposite direction can be turned off. Power would be controlled to each of the Hall ICs via use of a transistor based type of switch such as a FET. This additional functionality may reduce the power usage of the Hall ICs **76** by 50%. As a variation to improve current consumption, instead of powering all rotation sensors, only the up/down sensors or the left/right sensors may be powered, and/or power between the up/down and the left/right sensors may be cycled while checking for a non-random pattern to initiate wake-up.

An additional aspect of the device and method, which may be used in connection with the trackball power management feature discussed above, will now be described. The electronic circuitry **18** may switch from a sleep mode **20** to an active mode **22** based upon operation of the pointing device **16** in a non-random pattern, and does not switch from the sleep mode to the active mode based upon operation of the pointing device in a random pattern. Accordingly, the portable electronic device **10** may conserve power by discriminating between intentional and inadvertent initialization of the wake-up routine.

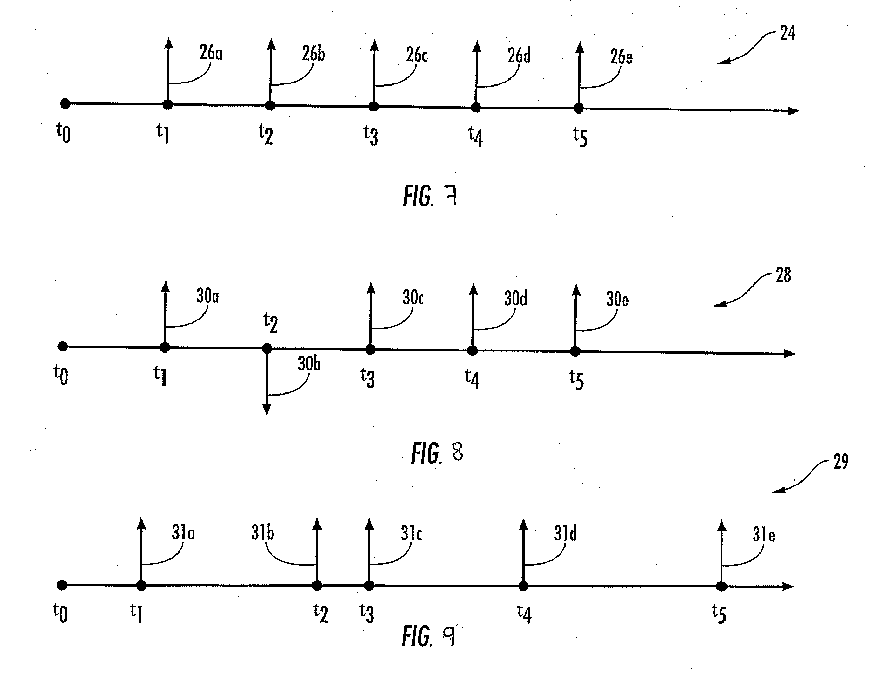

Referring now additionally to FIGS. 7-9, exemplary graphs illustrate exemplary time/direction pulses **26a-26e** for the non-random pattern **24** and the time/direction pulses **30a-30e** and **31a-31e** for the random patterns **28** and **29.** The time/direction pulses **26a-26e, 30a-30e,** and **31a-31e** are generated by the electronic circuitry **18** receiving signals from the manipulation of the pointing device **16** at times **t₀-t₅** as will be appreciated by those of skill in the art. The exemplary graphs are illustrated in one axis for ease of understanding, although the portable electronic device **10** may generate time/direction pulses **26a-26e, 30a-30e,** and **31a-31e** in more than one axis.

The time/direction pulses **26a-26e, 30a-30e,** and **31a-31e** received by the electronic circuitry **18** may be a series of light pulses. For example, a traditional optomechanical trackball system uses two different colored lights, one light sensor, and an encoder wheel connected to an axis that engages the trackball to generate a series of light pulses used by electronic circuitry and/or processor to determine the speed and direction of the trackball as will be appreciated by those of skill in the art.

Alternately, the pulses may be generated by other sensor systems such as a Hall effect sensor working in combination with a magnet.

The spacing between each time/direction pulse **26a-26e, 30a-30e,** and **31a-31e** represents the speed at which the pointing device **16** is traveling between two adjacent times **t₀-t₅,** and the arrow on each time/direction pulse **26a-26e, 30a-30e,** and **31a-31e** represents the direction that the pointing device **16** is traveling at a given time **t₀-t₅.** For instance, the non-random pattern **24** corresponds to manipulation of the pointing device **16** at a uniform speed and in a uniform direction.

The manipulation may involve a user moving the pointing device **16** in a specific direction. If the portable electronic device **10** were in an active mode, an action may move the pointer **34** along the dashed path **36** to a new position as resented by the dashed pointer **35** (FIG. 1). The non-random pattern **24** may further correspond to manipulation of the pointing device **16** for at least a threshold distance as will be appreciated by those of skill in the art.

A random pattern **28** may correspond to manipulation of the pointing device **16** at a uniform speed, but in a non-uniform direction as indicated by the time/direction pulse **30b** pointing in a different direction than the other time/direction pulses **30a, 30c, 30d,** and **30e** for example. Alternately, the random pattern **29** may correspond to manipulation of the pointing device **16** at a non-uniform speed, but in a uniform direction as indicated by the difference in spacing between time/direction pulse **31a** and **31b.** Additionally, the random pattern may include other time/direction pulse combinations.

Returning again to FIGS. 1 and 6, the threshold distance may correspond to rotation of the trackball for at least one hundred degrees, for example, as will be appreciated by those of skill in the art. The pointing device **16** may be exposed on an outer surface **40** of the housing **12** and thus be susceptible to contact with a user's pocket, for example.

The electronic circuitry **18** illustratively comprises a processor **42** and a power management module **44** cooperating with the processor as will be appreciated by those of skill in the art. The processor **42** may perform email functions **46** and/or scheduling functions **48,** for example. The electronic circuitry may also comprise a wireless transceiver **50.**

A method aspect is directed to power management for the portable electronic device **10** comprising a portable housing **12,** a battery **14** and trackball **16** carried by the portable housing for permitting user pointing. The trackball **16** includes a frame **72,** a ball **70** mounted by the frame to permit user rotation and displacement of the ball, and at least one rotation sensor **74, 76** cooperating with the ball. The method includes selectively powering the at least one rotation sensor **74, 76** from the battery **14** in response to displacement of the ball **70.**

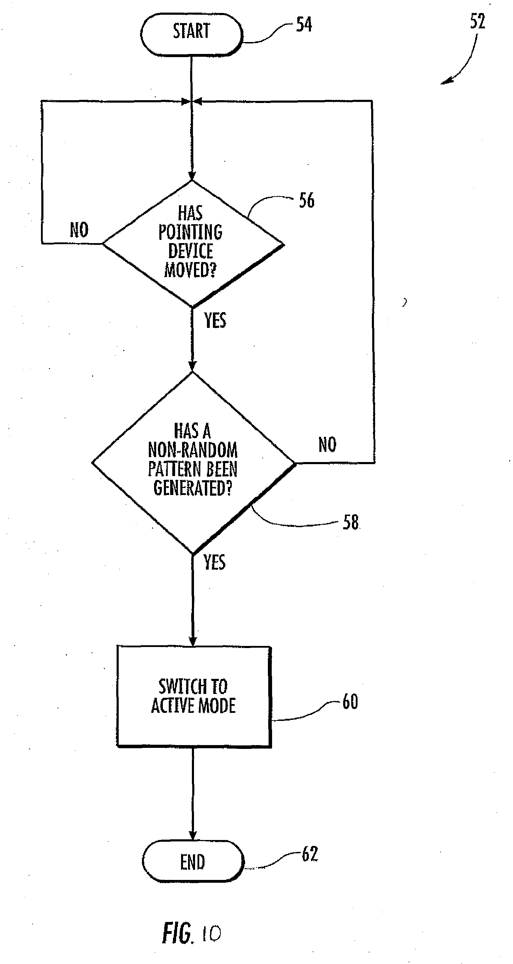

Another method aspect is for the power management of a portable electronic device **10** which may be used in connection with the first method aspect described above. This method aspect is now described with reference to the flowchart **52** of FIG. 10. As discussed, the portable electronic device **10** may include a portable housing **12,** a battery **14** and a pointing device **16** carried by the portable housing, and electronic circuitry **18** carried by the portable housing and connected to the battery and the pointing device.

The method starts at Block **54** and begins with the electronic circuitry **18** checking to see if the pointing device **16** has moved at Block **56.** The portable electronic device **10** is considered as being in the sleep or low power mode initially. It may enter the sleep mode by user selection or based on a period of inactivity, for example. If the pointing device **16** has not moved, the electronic circuitry **18** continues to monitor the pointing device. If the pointing device **16** has moved, the electronic circuitry **18** determines if a non-random pattern **24** has been generated at Block **58.** If a non-random pattern **24** has been generated, the electronic circuitry **18** switches from a sleep mode **20** to an active mode **22** based upon operation of the pointing device **16** in a non-random pattern at Block **60.** If a non-random pattern **24** has not been generated, the electronic circuitry **18** does not switch from the sleep mode **20** to the active mode **22** based upon operation of the pointing device **16** in the random pattern **28.** The method ends at Block **62.**

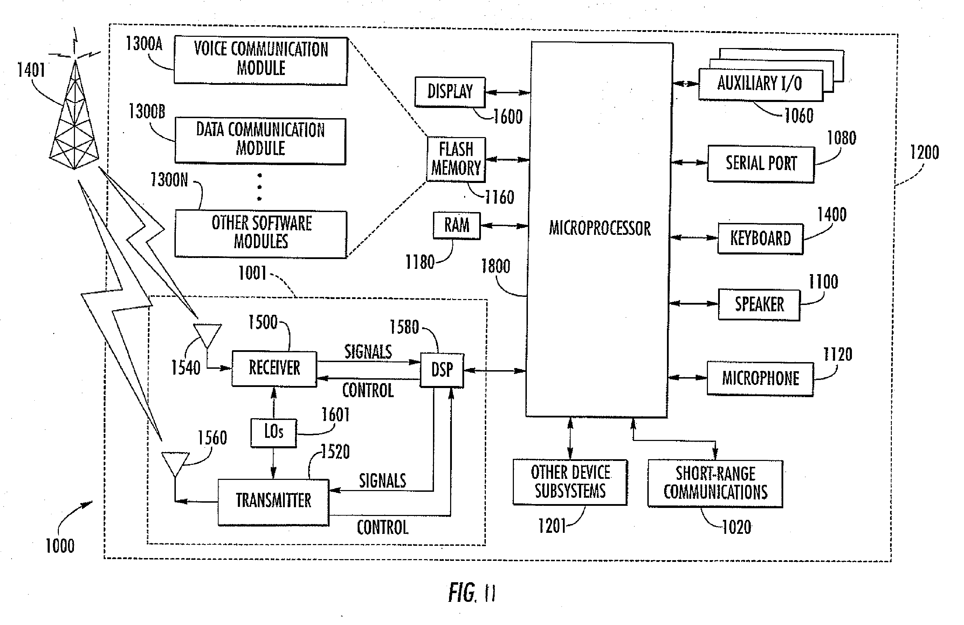

Another example of a handheld mobile wireless communications device **1000** that may be used in accordance the present device and method is further described with reference to FIG. 11. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 11. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments will come to the mind of one skilled in the art having the benefit of the teachings presented in the foregoing descriptions and the associated drawings. Therefore, it is understood that the device and method is not to be limited to the specific embodiments disclosed, and that other modifications and embodiments are intended to be included within the scope of the appended claims.

In an alternative embodiment, there is provided a portable electronic device comprising:
a portable housing;
a battery carried by said portable housing; and
a trackball carried by said portable housing for permitting user pointing and comprising
   a frame,
   a ball mounted by said frame to permit user rotation and displacement of said ball,
   at least one rotation sensor cooperating with said ball, and
   a power control switch responsive to displacement of said ball for selectively powering said at least one rotation sensor from said battery.

Optionally, the portable electronic device further comprises a circuit board carried by said portable housing and mounting said trackball; and wherein said power control switch is operatively connected between said ball and said circuit board.

Optionally, said power control switch comprises at least one electrically conductive spring for biasing said ball outwardly from said circuit board.

Optionally, said at least one electrically conductive spring comprises a first end electrically connected to said circuit board, and a second end being movable and defining a first contact of said power control switch.

Optionally, the portable electronic device further comprises a selection switch also responsive to displacement of said ball for permitting user selection; and wherein said selection switch comprises a deformable electrically conductive dome carried by said circuit board and defining a second contact of said power control switch.

Optionally, said at least one electrically conductive spring comprises a pair of electrically conductive springs, each having first ends electrically connected to said circuit board and second ends being movable together and defining first and second contacts for said power control switch.

Optionally, said at least one electrically conductive spring comprises a cantilevered leaf spring.

Optionally, said at least one rotation sensor comprises at least one magnetic roller and a Hall sensor associated therewith.
Optionally, said at least one rotation sensor comprises four magnetic rollers and a respective Hall sensor associated with each magnetic roller.

Optionally, the portable electronic device further comprises electronic circuitry carried by said portable housing and connected to said battery and said trackball, said electronic circuitry being switchable from a sleep mode to an active mode based upon operation of said trackball in a non-random pattern and not switching from the sleep mode to the active mode based upon operation of said trackball in a random pattern.

Optionally, the non-random pattern corresponds to manipulation of said pointing device at a uniform speed and in a uniform direction.

Optionally, said trackball is exposed on an outer surface of said portable housing.

In another alternative embodiment, there is provided a method of power management for a portable electronic device comprising a portable housing, a battery and trackball carried by the portable housing for permitting user pointing, the trackball comprising a frame, a ball mounted by the frame to permit user rotation and displacement of the ball, and at least one rotation sensor cooperating with the ball, the method comprising selectively powering the at least one rotation sensor from the battery in response to displacement of the ball.

Optionally, the portable electronic device further comprises a circuit board carried by the portable housing and mounting the trackball; and wherein selectively powering comprises providing a power control switch operatively connected between the ball and the circuit board.

Optionally, the method of providing a power control switch comprises providing at least one electrically conductive spring for biasing the ball outwardly from the circuit board.

Optionally, the at least one electrically conductive spring comprises a first end electrically connected to the circuit board, and a second end being movable and defining a first contact of the power control switch.

Optionally, said at least one rotation sensor comprises at least one magnetic roller and a Hall sensor associated therewith.

Optionally, said at least one rotation sensor comprises four magnetic rollers and a respective Hall sensor associated with each magnetic roller.

Optionally, the portable electronic device further comprises electronic circuitry carried by the portable housing and connected to the battery and the trackball, and the method further comprises:
switching the electronic circuitry from a sleep mode to an active mode based upon operation of the pointing device in a non-random pattern; and
not switching the electronic circuitry from the sleep mode to the active mode based upon operation of the pointing device in a random pattern.

Optionally, the trackball is exposed on an outer surface of the portable housing.

## Claims

1. A portable electronic device (10) comprising:
a portable housing (12);
a battery (14) carried by said portable housing (12);
a trackball (16) carried by said portable housing (12), said trackball (16) having a displaceable ball (70) and a power control switch (18, 80, 84, 88) responsive to displacement of said ball (70) for selectively powering said trackball (16) from said battery (14); and
electronic circuitry (18) carried by said portable housing (12) and connected to said battery (14) and said trackball (16), said electronic circuitry being switchable from a sleep mode to an active mode based upon operation of said trackball (16) in a non-random pattern and not switching from the sleep mode to the active mode based upon operation of said trackball in a random pattern.

2. The portable electronic device (10) according to Claim 1, wherein said electronic circuitry (18) comprises a circuit board (90) mounting said trackball (16), and wherein said power control switch (78, 80, 84, 88) is operatively connected between said ball (70) and said circuit board (90).

3. The portable electronic device (10) according to Claim 2, wherein said power control switch (78, 80, 84, 88) comprises at least one electrically-conductive spring (80) for biasing said ball (70) outwardly from said circuit board (90).

4. The portable electronic device (10) according to Claim 3, wherein said at least one electrically-conductive spring (80) comprises a first end electrically connected to said circuit board (90), and a second end being movable and defining a first contact of said power control switch (78, 80, 84, 88).

5. The portable electronic device (10) according to Claim 4, further comprising a selection switch (78, 88) also responsive to displacement of said ball (70), and wherein said selection switch comprises a deformable electrically-conductive dome (78) carried by said circuit board (90) and defining a second contact of said power control switch (78, 80, 84, 88).

6. The portable electronic device (10) according to Claim 3, wherein said at least one electrically-conductive spring (80) comprises a pair of electrically-conductive springs (80', 82'), each having first ends electrically connected to said circuit board (90) and second ends being movable together and defining first and second contacts for said power control switch (78, 80, 84, 88).

7. The portable electronic device (10) according to Claim 3, wherein said at least one electrically-conductive spring (80) comprises a cantilevered leaf spring.

8. The portable electronic device (10) according to Claim 1, wherein said trackball further comprises at least one rotation sensor (74, 76), said at least one rotation sensor comprises at least one magnetic roller (74) and a Hall sensor (76) associated therewith.

9. The portable electronic device (10) according to Claim 8, wherein said at least one rotation sensor (74, 76) comprises four magnetic rollers (74) and a respective Hall sensor (76) associated with each magnetic roller (74).

10. The portable electronic device (10) according to Claim 1, wherein the non-random pattern corresponds to manipulation of the trackball (16) at a uniform speed and in a uniform direction.

11. The portable electronic device (10) according to Claim 1, wherein said trackball (16) is exposed on an outer surface of said portable housing (12).
